# EUROPEAN PATENT APPLICATION

(11) **EP 4 625 810 A1**
(43) Date of publication of application: **01.10.2025**
(21) Application number: 23894916.8
(22) Date of filing: 15.11.2023
(51) Int. Cl.: H02P 29/024, H02P 6/18, H02P 27/06

(54) **MOTOR DRIVING DEVICE, CONTROL METHOD THEREOF, AND ELECTRONIC EQUIPMENT DRIVEN BY MOTOR**

(30) Priority: 24.11.2022 KR 20220159209; 18.10.2023 KR 20230139763
(71) Applicant: LX Semicon Co., Ltd., Daejeon 34027 (KR)
(72) Inventor: MIN, Chol, Daejeon 34027 (KR); CHOI, Jong Tae, Daejeon 34027 (KR); HA, Jae Hyun, Daejeon 34027 (KR)
(74) Representative: Ter Meer Steinmeister & Partner
(86) International application number: PCT/KR2023/018374
(87) International publication number: WO 2024/111987

(57) **Abstract**

The present invention is applicable to a motor driving device, for example, a device driving a direct current motor (DC motor), a control method thereof, and a device (electronic equipment) driven by a motor. The present invention may include, in a method of controlling a motor, a step of driving the motor according to a duty command; a step of obtaining a first value by detecting a zero-phase change amount of a first phase current driving the motor; a step of obtaining a second value by detecting a change amount of a maximum level of the first phase current; and a step of determining to be in a control error state if at least one of the detected first value and second value is greater than an error level.

## Description

### TECHNICAL FIELD

The present invention is applicable to a motor driving device, for example, a device for driving a direct current motor (DC motor), particularly a brushless DC (BLDC) motor, a control method thereof, and an electronic equipment driven by the motor.

### BACKGROUND ART

Recently, various electronic equipment, including home appliances such as washing machines and refrigerators, have been using brushless direct current (BLDC) motors, which do not use commutator brushes and thus have high energy efficiency.

A BLDC motor performs electronic commutation to change the direction of current flowing through the coils of the armature, and when the position of the rotor matches the commutation timing, it can form a continuous rotating magnetic field to rotate the rotor.

Such BLDC motors are used in a wide range of fields, not only in home appliances such as refrigerators, air purifiers, and air conditioners but also in information processing devices. BLDC motors require separate detection devices to detect the rotational speed and the position of the rotor.

A sensorless BLDC motor driving circuit, which does not use a separate detection device such as a Hall sensor for detecting the position of the rotor, can detect the position of the permanent magnet of the rotor by detecting the back electromotive force (back EMF) generated in the coils of the motor.

When driving a BLDC motor using a BLDC motor controller, abnormal states may occur due to foreign objects jamming the motor or damage to the motor, etc.

If the BLDC motor controller drives the motor without recognizing such abnormal states, damage to the motor driving IC may occur due to phenomena such as abnormal current or abnormal voltage.

Therefore, if the BLDC motor is controlled without executing protective operations in such cases, when the motor becomes uncontrollable, signals that can cause damage to the motor driving unit may be continuously applied, leading to defects in the motor driving unit or secondary damage to the application for driving.

Meanwhile, when determining an abnormal state using the instantaneous change amount of phase current level, there is a problem that normal changes according to a command cannot be distinguished from abnormal changes.

Therefore, a solution to solve these problems is required.

### DISCLOSURE

### TECHNICAL PROBLEM

According to an embodiment of the present invention, the present invention provides a motor driving device, a control method thereof, and an electronic equipment driven by a motor that may detect an abnormal state during motor control.

Also, the present invention provides a motor driving device, a control method thereof, and an electronic equipment driven by a motor that may detect an abnormal state during motor control and respond thereto to proceed with a process corresponding to an error case.

Furthermore, the present invention provides a motor driving device, a control method thereof, and an electronic equipment driven by a motor that may determine whether an instantaneous change in phase current during motor control is a normal change due to a command or load change or an abnormal change due to an error environment.

Moreover, according to another embodiment of the present invention, those skilled in the art will understand through the entire context of the specification and drawings that there may be additional technical problems not mentioned here.

### TECHNICAL SOLUTION

To achieve the above-mentioned objective, as a first aspect of the present invention, the present invention may include, in a method of controlling a motor, driving the motor according to a duty command; obtaining a first value by detecting a zero-phase change amount of a first phase current driving the motor; obtaining a second value by detecting a change amount of a maximum level of the first phase current; and determining to be in a control error state if at least one of the detected first value and second value is greater than an error level.

In an exemplary embodiment, the first value may be obtained by comparing the cumulative average value at the zero phase of the first phase current with the instantaneous variation of a zero-phase value of a current first phase current.

In an exemplary embodiment, the second value may be obtained by comparing the cumulative average value of the maximum level of the first phase current with the instantaneous variation of a maximum level of a current first phase current value.

In an exemplary embodiment, if determined to be in a control error state, the motor may be stopped or restarted.

In an exemplary embodiment, the obtaining the first value and the obtaining the second value may be performed for each cycle of the motor.

In an exemplary embodiment, the obtaining the first value may include sensing a zero-phase value of a current first phase current; calculating the cumulative average value at the zero phase of the first phase current; and comparing the cumulative average value at the zero phase of the first phase current with the zero-phase value of the current first phase current.

In an exemplary embodiment, the obtaining the second value may include sensing a maximum level value of a current first phase current; calculating the cumulative average value of the maximum level of the first phase current; and comparing the cumulative average value of the maximum level of the first phase current with the maximum level value of the current first phase current.

To achieve the above-mentioned objective, as a second aspect of the present invention, the present invention may include, in a motor driving device, an inverter that delivers driving signals to a motor; a sensing part that senses at least one of current and voltage of the motor; and a controller that controls the inverter using a phase current sensed by the sensing part, and the controller may obtain a first value by detecting a zero-phase change amount of a first phase current sensed by the sensing part, obtain a second value by detecting a change amount of a maximum level of the first phase current, and determine to be in a control error state if at least one of the detected first value and second value is greater than an error level.

In an exemplary embodiment, the controller may obtain the first value by comparing the cumulative average value at the zero phase of the first phase current with the instantaneous variation of a zero-phase value of a current first phase current.

In an exemplary embodiment, the controller may obtain the second value by comparing the cumulative average value of the maximum level of the first phase current with the instantaneous variation of a maximum level of a current first phase current value.

In an exemplary embodiment, if determined to be in a control error state, the controller may stop or restart the motor.

In an exemplary embodiment, the controller may obtain the first value and the second value for each cycle of the motor.

In an exemplary embodiment, the controller may include a PI controller that determines a target speed and phase by checking voltage error; a speed calculator that determines a current reflected speed for controlling to the target speed; a PWM signal generator that generates a PWM signal having a period and magnitude according to the speed and phase; and a protection controller that stops or restarts the motor if determined to be in a control error state.

In an exemplary embodiment, the controller may sense a zero-phase value of a current first phase current, calculate the cumulative average value at the zero phase of the first phase current, and compare the cumulative average value at the zero phase of the first phase current with the zero-phase value of the current first phase current to obtain the first value.

In an exemplary embodiment, the controller may sense a maximum level value of a current first phase current, calculate the cumulative average value of the maximum level of the first phase current, and compare the cumulative average value of the maximum level of the first phase current with the maximum level value of the current first phase current to obtain the second value.

To achieve the above-mentioned objective, as a third aspect of the present invention, the present invention may include, in a device driven by a motor, a motor; an inverter that delivers driving signals to the motor; a sensing part that senses at least one of current and voltage of the motor; and a controller including a protection controller that controls the inverter using a phase current sensed by the sensing part and stops or restarts the motor, and the controller may obtain a first value by detecting a zero-phase change amount of a first phase current sensed by the sensing part, obtain a second value by detecting a change amount of a maximum level of the first phase current, and deliver a signal to the protection controller by determining to be in a control error state if at least one of the detected first value and second value is greater than an error level.

### EFFECT OF THE INVENTION

According to an exemplary embodiment of the present invention, there are the following effects.

First, according to an embodiment of the present invention, an abnormal state during motor control may be detected.

Also, an abnormal state during motor control may be detected and responded to proceed with a process corresponding to an error case.

Furthermore, it may be determined whether an instantaneous change in phase current during motor control is a normal change due to a command or load change or an abnormal change due to an error environment.

Moreover, according to another embodiment of the present invention, there are additional technical effects not mentioned here. Those skilled in the art can understand through the entire context of the specification and drawings.

### BRIEF DESCRIPTION OF THE DRAWINGS

FIG. 1 is a block diagram illustrating a motor driving device according to an embodiment of the present invention.
FIG. 2 is a block diagram illustrating a circuit configuration of a motor driving device according to an embodiment of the present invention.
FIG. 3 is a detailed block diagram illustrating a motor driving device according to an embodiment of the present invention.
FIG. 4 is a flowchart illustrating a motor control method according to an embodiment of the present invention.
FIG. 5 is a schematic diagram illustrating a state where phase current changes normally by a control process.
FIG. 6 is a schematic diagram illustrating a state where phase current changes abnormally by an abnormal condition.
FIG. 7 is a graph illustrating a control cycle of a motor.
FIG. 8 is a waveform diagram illustrating a state where phase current changes abnormally by an abnormal condition.
FIG. 9 is an enlarged view of point A in FIG. 8.

### BEST MODE FOR CARRYING OUT THE INVENTION

Hereinafter, embodiments disclosed in the present specification will be described in detail with reference to the attached drawings, but identical or similar components are assigned the same reference numbers regardless of drawing symbols, and redundant descriptions thereof will be omitted. Suffixes "module" and "part" for components used in the following description are assigned or used interchangeably only for convenience of specification drafting and do not have distinct meanings or roles by themselves. Also, in describing embodiments disclosed in the present specification, if it is determined that a detailed description of related known technology may obscure the gist of the embodiments disclosed in the present specification, the detailed description will be omitted. Also, it should be noted that the attached drawings are only for facilitating understanding of the embodiments disclosed in the present specification, and the technical idea disclosed in the present specification should not be construed as being limited by the attached drawings.

Furthermore, although each drawing is described for convenience of explanation, it is within the scope of the present invention for those skilled in the art to implement other embodiments by combining at least two or more drawings. Hereinafter, embodiments disclosed in the present specification will be described in detail with reference to the attached drawings, but identical or similar components are assigned the same reference numbers regardless of drawing symbols, and redundant descriptions thereof will be omitted. Suffixes "module" and "part" for components used in the following description are assigned or used interchangeably only for convenience of specification drafting and do not have distinct meanings or roles by themselves.

Also, in describing embodiments disclosed in the present specification, if it is determined that a detailed description of related known technology may obscure the gist of the embodiments disclosed in the present specification, the detailed description will be omitted.

Also, it should be noted that the attached drawings are only for facilitating understanding of the embodiments disclosed in the present specification, and the technical idea disclosed in the present specification should not be construed as being limited by the attached drawings.

Furthermore, although each drawing is described for convenience of explanation, it is within the scope of the present invention for those skilled in the art to implement other embodiments by combining at least two or more drawings.

Also, when an element such as a layer, an area, or a substrate is referred to as being present "on" another component, it may be understood that it is directly present on the other element or an intermediate element may exist therebetween.

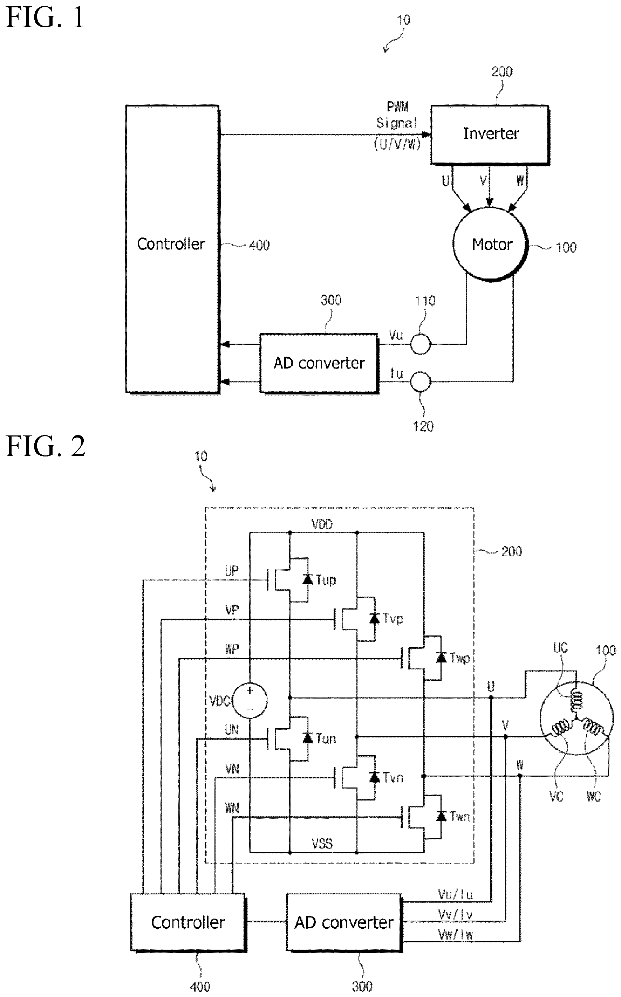

FIG. 1 is a block diagram illustrating a motor driving device according to an embodiment of the present invention. FIG. 2 is a block diagram illustrating a circuit configuration of a motor driving device according to an embodiment of the present invention.

Referring to FIG. 1, a motor driving device 10 according to an embodiment may include driving circuit blocks 200, 300, 400, 500 for driving a motor 100. For example, such a motor driving device 10 may drive a sensorless BLDC (Brushless Direct Current) motor 100. Hereinafter, the description focuses on an example where the motor 100 is a BLDC motor.

Such a motor driving device 10 may include an inverter 200 that delivers driving signals to the motor 100, a voltage sensing part 110 that senses the voltage Vu output from the motor 100, a current sensing part 120 that senses the current Iu output from the motor 100, and a controller 400 that controls the inverter 200 to drive the motor 100.

Here, an example of sensing the voltage and current of the U phase among the three phases to control the motor 100 is shown. Also, the voltage sensing part 110 and the current sensing part 120 may be simply expressed as sensing parts 110, 120. Such sensing parts 110, 120 may sense at least one of the voltage and current output from the motor 100.

For example, referring to FIG. 2, the motor 100 may include a stator having three-phase coils UC, VC, WC with different phases, and a rotor using permanent magnets. In FIG. 2, a memory 500 is omitted. Hereinafter, an example of an inverter 200 driving a sensorless BLDC (Brushless Direct Current) motor 100 is briefly described.

The stator of the motor 100 may include a first coil UC having a U phase (first phase), a second coil VC having a V phase (second phase), and a third coil WC having a W phase (third phase). The motor 100 may be driven according to the voltage supplied to each of the three-phase coils UC, VC, WC from the inverter 200. In this case, the magnetic force generated from the first to third coils UC, VC, WC may rotate the rotor of the motor 100.

The inverter 200 may operate under the control of the controller 400 to supply a first power voltage VDD to each of the three-phase coils UC, VC, WC of the motor 100 through each of the first to third phases U, V, W, or to supply a second power voltage VSS, or to float the corresponding coil without supplying the first and second power voltages VDD, VSS.

The inverter 200 receives the first power voltage VDD and the second power voltage VSS from the power supplier VDC. The inverter 200 may receive first-first and first-second coil control signals UP, UN, second-first and second-second coil control signals VP, VN, third-first and third-second coil control signals WP, WN from the controller 400. The coil control signals UP, UN, VP, VN, WP, WN supplied from the controller 400 may be Pulse Width Modulation (PWM) signals.

The inverter 200 may include a first pull-up transistor Tup and a first pull-down transistor Tun connected in series between the supply line of the first power voltage VDD and the supply line of the second power voltage VSS that drive the first coil UC of the motor 100.

Also, the inverter 200 may include a second pull-up transistor Tvp and a second pull-down transistor Tvn connected in series between the supply line of the first power voltage VDD and the supply line of the second power voltage VSS that drive the second coil VC of the motor 100.

The inverter 200 may include a third pull-up transistor Twp and a third pull-down transistor Twn connected in series between the supply line of the first power voltage VDD and the supply line of the second power voltage VSS that drive the third coil WC of the motor 100.

The controller 400 may sense voltage and current signals sensed from the motor 100 through the sensing parts 110, 120. In this case, the current and voltage signals (Iu/Vu; in case of sensing the U phase signal) sensed by the sensing parts 110, 120 may be input to the controller 400 after being converted into digital signals through the AD converter 300.

When a user operates an electronic equipment, such as a home appliance equipped with the motor 100, the controller 400 may deliver driving signals to the motor 100 through the inverter 200 in correspondence with the set duty by the user's command. That is, for example, the motor driving device 10 including the motor 100 may be an electronic equipment. For example, the motor driving device 10 may be a home appliance such as a refrigerator, air purifier, air conditioner, etc., driven by a motor 100. For example, such a motor driving device 10 may correspond to a device including the motor 100.

As such, the motor driving device 10 includes a controller 400 that controls the inverter 200. This controller 400 may control the inverter 200 using the phase current sensed by the sensing parts 110, 120.

As an exemplary embodiment, the controller 400 may drive the motor 100 according to an input driving command (PWM duty). For example, the controller 400 may determine the control state of the motor 100 using the phase current sensed by the sensing parts 110, 120. In other words, the controller 400 may determine whether the motor 100 is being controlled normally using the phase current sensed by the sensing parts 110, 120.

For example, the controller 400 may obtain a first value by detecting a zero-phase change amount (i.e., a value at the zero phase of the U phase current) of the phase current (for example, U phase current) sensed by the sensing parts 110, 120, and obtain a second value by detecting a change amount of the maximum level of this phase current.

The controller 400 may determine to be in a control error state if at least one of the detected first value and second value is greater than a preset error level.

Hereinafter, as an example, the process of determining to be in a control error state in the controller 400 is explained using an example of sensing the U phase current.

As such, in the controller 400, a first value may be obtained by detecting a zero-phase change amount of the U phase current (i.e., a value at the zero phase of the U phase current), and a second value may be obtained by detecting a change amount of the maximum level of this U phase current.

As a specific example, the controller 400 may obtain a first value by comparing the cumulative average value at the zero phase of the U phase current with the instantaneous change amount of the zero-phase value of the current U phase current.

Also, the controller 400 may obtain a second value by comparing the cumulative average value of the maximum level of the U phase current with the instantaneous change amount of the maximum level of the current U phase current value.

By comparing these first and second values, if at least one of the first and second values is greater than a preset error level, the controller 400 may determine to be in a control error state.

As such, if determined to be in a control error state, the controller 400 may proceed with a process corresponding to an error case. For example, if determined to be in a control error state, the controller 400 may stop or restart the motor 100.

In an exemplary embodiment, the controller 400 may obtain the first value and the second value for each cycle of the motor 100. For example, the controller 400 may obtain the first value and the second value for each rotation of the motor 100.

As such, according to an embodiment of the present invention, an abnormal state of the motor 100 may be detected through the controller 400.

In this case, as explained above, the abnormal state of the motor 100 may be detected by comparing the cumulative average value of the phase current with the instantaneous change amount. This is to distinguish the abnormal state from the state of the motor 100 due to variable load/variable command.

According to an embodiment of the present invention, the cumulative average value of the phase current may be used as a reference value used for comparison in change amount detection. The reason for using the cumulative average value of the phase current is that in the case of variable load or variable command, according to the motor control principle, there is a characteristic that changes along with the direction of the varied load or varied command.

Therefore, by comparing the cumulative average value of the phase current with the instantaneous change amount, it may be determined whether it is a normal change of current due to a command or load change or an abnormal change due to an error environment.

As a specific example, the controller 400 may sense the zero-phase value of the current U phase current, calculate the cumulative average value at the zero phase of the U phase current, and compare the cumulative average value at the zero phase of the U phase current with the zero-phase value of the current U phase current to obtain the first value.

Meanwhile, the controller 400 may sense the maximum level value of the current U phase current, calculate the cumulative average value of the maximum level of the U phase current, and compare the cumulative average value of the maximum level of the U phase current with the maximum level value of the current U phase current to obtain the second value.

Therefore, the abnormal state of the motor 100 due to an error environment may be detected using at least one of the comparisons of these first and second values.

These matters will be described in detail later.

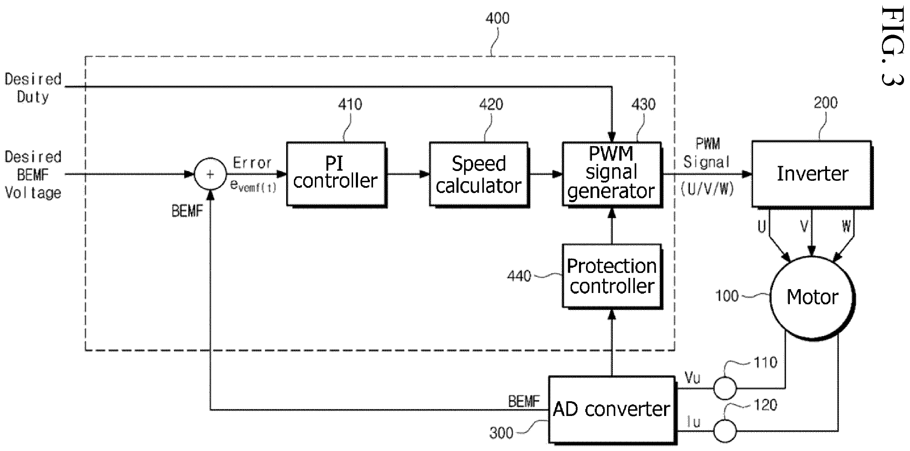

FIG. 3 is a detailed block diagram illustrating a motor driving device according to an embodiment of the present invention.

Referring to FIG. 3, a specific implementation example of the controller 400 is shown. Here, the controller 400 may use a Proportional-Integral control method.

In an exemplary embodiment, the controller 400 may include a PI controller 410 that determines a target speed and phase by checking voltage error, a speed calculator 420 that determines a current reflected speed for controlling to the target speed, and a PWM signal generator 430 that generates a PWM signal having a period and magnitude according to such speed and phase.

The controller 400 may determine the target speed and phase by checking the back electromotive force (BEMF) voltage error. This back electromotive force (BEMF) voltage may be input to the PI controller 410 through the sensing parts 110, 120 and the AD converter 300.

Also, the controller 400 may include a protection controller 440 that stops or restarts the motor 100 if determined to be in a control error state by comparing the cumulative average value and instantaneous change amount of the phase current (for example, U phase current) sensed by the sensing parts 110, 120 with a preset value.

Here, "Desired Duty" may correspond to a user command. When a user command is input, the user command may be delivered to the PWM signal generator 430.

The user command may be connected to the PI controller 410 to determine the target speed of the motor 100.

Afterwards, the speed calculator 420 may determine a current reflected speed for controlling the motor 100 to this target speed. Then, the PWM signal generator 430 may generate a PWM signal having a period and magnitude according to the determined speed and phase.

Meanwhile, for example, the measurement of the back electromotive force voltage may be performed in a state where voltage is not applied to the U phase (U phase floating). That is, the voltage sensed by the sensing parts 110, 120 in the U phase when the U phase is floating and voltage is not applied to the U phase corresponds to the back electromotive force (BEMF) voltage.

This back electromotive force voltage may be applied to the PI controller 410 after being converted into a digital signal by the AD converter 300. The back electromotive force voltage may be detected at a zero-cross point where the phase current switches from a negative phase to a positive phase.

For example, the back electromotive force voltage Vu detected in the U phase may be compared and operated with an ideal back electromotive force voltage ("Desired BEMF Voltage"). The ideal back electromotive force voltage may correspond to Vdd/2. Such a condition where the back electromotive force voltage is Vdd/2 may correspond to the zero-cross point of the U phase current. Therefore, the floating of the U phase may be performed at the zero-cross point of the U phase current. Meanwhile, the phase of the back electromotive force voltage Vu detected in the U phase may be compared and operated with the phase of the ideal back electromotive force voltage ("Desired BEMF Phase").

Through this process, based on the duty according to the user command, a PWM signal having a period and magnitude according to the speed and phase determined in the controller 400 may be applied to the inverter 200.

As explained above, the controller 400 may determine to be in a control error state by comparing the accumulated average value and instantaneous change amount of the phase current (for example, U phase current) sensed by the sensing parts 110, 120 with a preset value. For example, this determination to be in a control error state may be performed in the PWM signal generator 430 or the protection controller 440.

As such, if determined to be in a control error state, the protection controller 440 may proceed with a process corresponding to an error case. For example, if determined to be in a control error state, the protection controller 440 may stop or restart the motor 100.

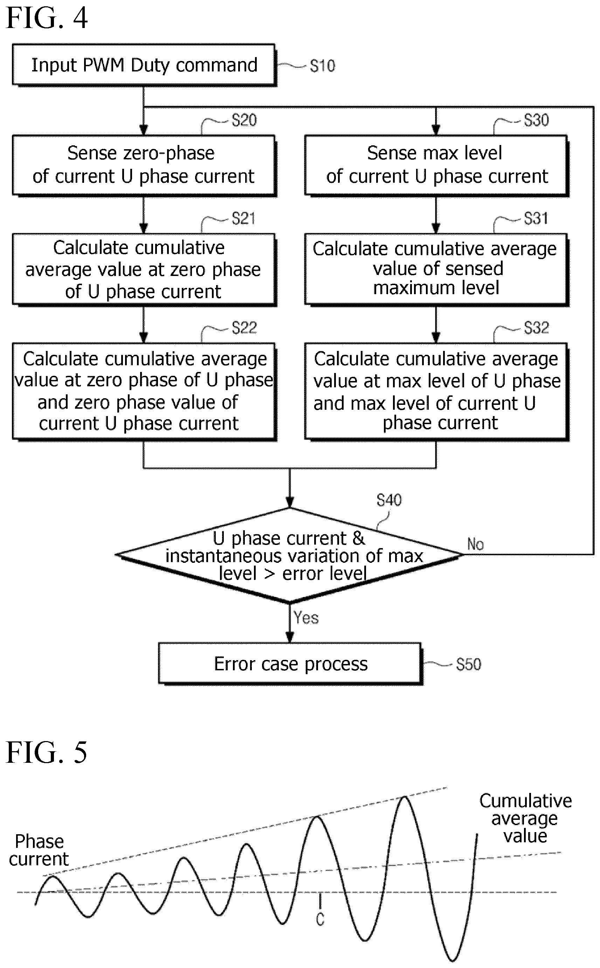

FIG. 4 is a flowchart illustrating a motor control method according to an embodiment of the present invention.

As explained above, the motor control method according to an embodiment of the present invention may be performed in the controller 400. For example, the motor control method according to an embodiment of the present invention may be performed in the PWM signal generator 430 or the protection controller 440.

Referring to FIG. 4, the method of controlling a motor 100 may include driving the motor according to a duty command in step S10, obtaining a first value by detecting a zero-phase change amount of a first phase current driving the motor 100 in step S20, obtaining a second value by detecting a change amount of the maximum level of the first phase current in step S30, and determining whether at least one of the detected first value and second value is greater than an error level in in step S40 and determining to be in a control error state in step S50.

For example, the first phase may be the U phase. In case of a motor 100 driven by three-phase current, for example, the first phase may also be the V phase or the W phase. Hereinafter, the process of determining to be in a control error state using the U phase current is explained.

In an exemplary embodiment, obtaining the first value in step S20 may be obtained by comparing the cumulative average value at the zero phase of the U phase current with the instantaneous change amount of the zero-phase value of the current U phase current.

For example, obtaining the second value in step S30 may be obtained by comparing the cumulative average value of the maximum level of the U phase current with the instantaneous change amount of the maximum level of the current U phase current value.

As mentioned above, in an exemplary embodiment, obtaining the first value in step S20 and obtaining the second value in step S30 may be performed for each cycle of the motor 100.

As a specific example, obtaining the first value in step S20 may include sensing the zero-phase value of the current U phase current (zero phase sensing) in step S21, calculating the cumulative average value at the zero phase of the U phase current in step S22, and comparing the cumulative average value at the zero phase (zero phase) of the U phase current with the zero-phase value of the current U phase current in step S23.

As a specific example, obtaining the second value in in step S30 may include sensing the maximum level value of the current U phase current in step S31, calculating the cumulative average value of the maximum level of the U phase current in step S32, and comparing the cumulative average value of the maximum level of the U phase current with the maximum level value of the current U phase current in step S33.

Subsequently, in the step S40, determining whether at least one of the first value and second value or at least one of the instantaneous change amount at the zero phase of the U phase current and the instantaneous change amount of the maximum level calculated by the first value and second value is greater than a specific error level may be performed.

In this step S40, if at least one of the first value and second value or at least one of the instantaneous change amount at the zero phase of the U phase current and the instantaneous change amount of the maximum level calculated by the first value and second value is less than a specific error level, obtaining the first value in step S20 and obtaining the second value in step S30 may be repeatedly performed.

However, if at least one of the first value and second value or at least one of the instantaneous change amount at the zero phase of the U phase current and the instantaneous change amount of the maximum level calculated by the first value and second value is greater than a specific error level, it may be determined to be in a control error state in step S50.

As such, in calculating the instantaneous change amount of the zero-cross point of the phase current, the cumulative current zero point may be used as a comparison value. Also, the difference value between the current phase current value and the cumulative current zero point may be calculated, and the calculated difference value may be determined as the instantaneous change amount of the zero point.

In this case, the comparison value may be calculated with the following condition.

Accumulated average current zero point = (previous accumulated average zero point value + current zero point)/2

Meanwhile, the calculation of the instantaneous change amount of the maximum current level may use the cumulative maximum current level as a comparison value. Additionally, the difference value between the current reading and the cumulative current zero point may be calculated, and the calculated difference value may be determined as the instantaneous change amount of the maximum current level.

In this case, the comparison value may be calculated with the following condition.

Accumulated average maximum current level = (previous accumulated average maximum current level + current maximum current level) / 2

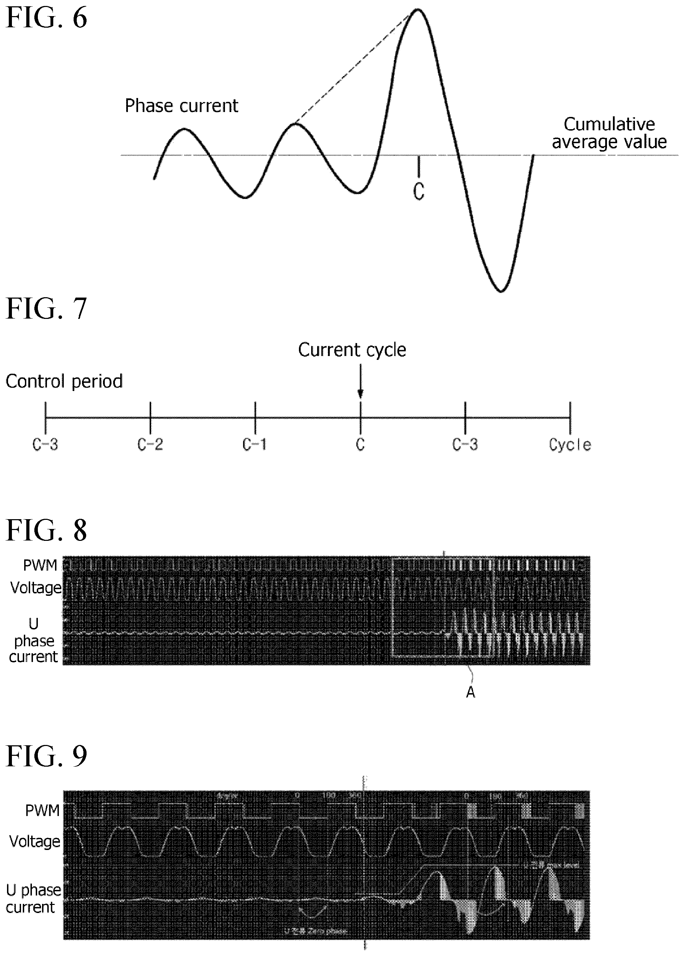

FIG. 5 is a schematic diagram illustrating a state where phase current changes normally by a control process. FIG. 6 is a schematic diagram illustrating a state where phase current changes abnormally by an abnormal condition. FIG. 7 is a graph illustrating a control cycle of a motor.

As explained above, the cumulative average value of the phase current may be used as a reference (Reference) value used for comparison in current change amount detection.

As shown in FIG. 5, in the case of variable load or variable command, according to the motor control principle, there is a characteristic that changes along with the direction of the varied load or varied command.

Referring to FIG. 5, the instantaneous change amount of the phase current increases at a specific point (C, e.g., current point) during the control cycle, but in this case, it shows a state where the cumulative average value is also increasing. If the abnormal state is determined using only the instantaneous change amount of the phase current at a specific point, the state shown in FIG. 5 may also be determined as an abnormal state. However, if the cumulative average value of the phase current is considered together, the corresponding situation may correspond to the case of variable load or variable command.

Meanwhile, referring to FIG. 6, it may be seen that a large instantaneous change amount of the phase current occurs at a specific point (C, e.g., current point) during the control cycle. However, unlike the case shown in FIG. 5, the cumulative average value of the phase current may correspond to a state where it does not change or changes minutely. This case may be determined as an abnormal change due to an error environment, not a normal change of current due to a command or load change.

FIG. 8 is a waveform diagram illustrating a state where phase current changes abnormally by an abnormal condition. FIG. 9 is an enlarged view of point A in FIG. 8.

Referring to FIG. 8 and FIG. 9, PWM command (PWM), output voltage (Voltage) for driving the motor 100 according to this, and U phase current detected through the sensing parts 110, 120 are shown. That is, PWM control angles (0 degrees, 180 degrees, 360 degrees) are marked, and it may be seen that the driving voltage is formed with a phase difference at this PWM control angle. In this case, referring to FIG. 9, it may be seen that there exists a U phase current zero phase between the control angle 0 degrees and 180 degrees.

Referring to FIG. 8, it may be seen that, in a state where the PWM command and the output voltage according to it do not vary significantly, the U phase current increases greatly from the vertical line at part A.

Referring to FIG. 9, which enlarges part A, it can be confirmed that the maximum level of the U phase current increases rapidly. However, in this case, the PWM command or driving voltage is in a state where it does not change significantly. Also, it can be seen that the cumulative average value of the U phase current is in a state where it does not increase.

Therefore, such a case may be determined as an abnormal change due to an error environment, not a normal change of current due to a command or load change.

As such, in part A, by considering both the instantaneous change amount of the phase current and the cumulative average value of the phase current, it is possible to detect an abnormal state due to an error environment, not a change in phase current due to variable load or variable command.

The above description is merely illustrative of a technical idea of the present invention, and those skilled in the art to which the present invention pertains may make various modifications and variations within a scope not departing from essential characteristics of the present invention.

Therefore, embodiments disclosed in the present invention are not intended to limit a technical idea of the present invention but to explain it, and a scope of the technical idea of the present invention is not limited by such embodiments.

A protection scope of the present invention should be interpreted by the following claims, and all technical ideas within a scope equivalent thereto should be construed as being included in a right scope of the present invention.

### INDUSTRIAL APPLICABILITY

According to the present invention, a device for driving a direct current motor (DC motor), a control method thereof, and a device (electronic equipment) driven by the motor may be provided.

## Claims

1. A method of controlling a motor, comprising:
driving the motor according to a duty command;
obtaining a first value by detecting a zero-phase change amount of a first phase current driving the motor;
obtaining a second value by detecting a change amount of a maximum level of the first phase current; and
determining that the motor is in a control error state if at least one of the detected first value and second value is greater than an error level.

2. The method of controlling a motor according to claim 1, wherein the first value is obtained by comparing the cumulative average value at a zero phase of the first phase current with the instantaneous variation of a zero-phase value of a current first phase current.

3. The method of controlling a motor according to claim 1, wherein the second value is obtained by comparing the cumulative average value of the maximum level of the first phase current with the instantaneous variation of a maximum level of a current first phase current value.

4. The method of controlling a motor according to claim 1, wherein the obtaining the first value includes:
sensing a zero-phase value of the current first phase current;
calculating the cumulative average value at the zero phase of the first phase current; and
comparing the cumulative average value at the zero phase of the first phase current with a zero-phase value of the current first phase current.

5. The method of controlling a motor according to claim 1, wherein the obtaining the second value includes:
sensing a maximum level value of a current first phase current;
calculating the cumulative average value of the maximum level of the first phase current; and
comparing the cumulative average value of the maximum level of the first phase current with the maximum level value of the current first phase current.

6. A motor driving device, comprising:
an inverter configured to deliver driving signals to a motor;
a sensing part configured to sense at least one of current and voltage of the motor; and
a controller configured to control the inverter using a phase current sensed by the sensing part,
wherein the controller is configured to obtain a first value by detecting a zero-phase change amount of a first phase current sensed by the sensing part, to obtain a second value by detecting a change amount of a maximum level of the first phase current, and to determine that the motor is in a control error state if at least one of the detected first value and second value is greater than an error level.

7. The motor driving device according to claim 6, wherein the controller is configured to obtain the first value by comparing the cumulative average value at a zero phase of the first phase current with the instantaneous variation of a zero-phase value of a current first phase current.

8. The motor driving device according to claim 6, wherein the controller is configured to obtain the second value by comparing the cumulative average value of a maximum level of the first phase current with the instantaneous variation of a maximum level of a current first phase current value.

9. The motor driving device according to claim 6, wherein the controller is configured to sense a zero-phase value of a current first phase current, to calculate the cumulative average value at a zero phase of the first phase current, and to compare the cumulative average value at the zero phase of the first phase current with a zero-phase value of the current first phase current to obtain the first value.

10. The motor driving device according to claim 6, wherein the controller is configured to sense a maximum level value of a current first phase current, to calculate the cumulative average value of a maximum level of the first phase current, and to compare the cumulative average value of a maximum level of the first phase current with a maximum level value of the current first phase current to obtain the second value.
